# EUROPEAN PATENT APPLICATION

(11) **EP 3 222 957 A1**
(43) Date of publication of application: **27.09.2017**
(21) Application number: 16162256.8
(22) Date of filing: 24.03.2016
(51) Int. Cl.: F28F 9/02, F16B 43/02, F16J 13/06, F16L 23/036, F28D 7/04, F28F 9/26

(54) **HOOK ASSEMBLY AND SPIRAL HEAT EXCHANGER**

(71) Applicant: Alfa Laval Corporate AB, 221 00 Lund (SE); Alfa Laval Spiral SAS, 58028 Nevers (FR)
(72) Inventor: BRANCHERIE, Sébastien, 58210 CHAMPLEMY (FR); MAURE, Pascal, 58000 NEVERS (FR)
(74) Representative: Alfa Laval Attorneys

(57) **Abstract**

A hook assembly for connecting a first part (101) of a heat exchanger (100) to a second part (102) of the heat exchanger (100), comprising a first hook device (1) that acts on the first part (101), and a second hook device (2) that acts on the second part (102) for pressing the first and second parts (101, 102) towards each other, wherein an elongated bar (3) extends through the first and second hook devices (1, 2), a first nut (4) is attached to the elongated bar (3) and abuts the first hook device (1) for fixing it relative the first part (101) of the heat exchanger (100), and a second nut (5) is attached to the elongated bar (3) and abuts the second hook device (2) for fixing it relative the second part (102) of the heat exchanger (100).

## Description

### Technical Field

The invention relates to a hook assembly for connecting a first part of a heat exchanger to a second part of the heat exchanger. The hook assembly has a first hook device that acts on the first part and a second hook device that acts on the second part for pressing the two parts towards each other. The invention also relates to a spiral heat exchanger.

### Background Art

Today many different types of plate heat exchangers exist and are employed in various applications depending on their type. Generally, a heat exchanger has a number of heat transfer elements that form alternating first and second flow paths in between the elements. A first fluid flows in the first flow path and a second fluid flows in the second flow path. As such flow goes on and when there is a temperature difference between the fluids, heat is transferred from the warmer fluid to the colder fluid.

The design of the heat exchanger is important for providing efficient transfer of heat between the fluids. The heat transferring elements must also be durable and should withstand various stresses that may occur, for example due to pressure variations and temperature differences. The heat transferring elements are often located inside a shell that protects the elements and assures that the pressurized fluid is contained within the heat exchanger. It is then important that the shell is properly sealed. In some cases it is also important that the shell can be opened for allowing the heat transferring elements to be cleaned or replaced. After such cleaning or replacement the shell must be sealed again. A number of techniques exist for sealing a shell of a heat exchanger.

When a possibility to open the heat exchanger is required then a number of techniques are used for connecting the parts of the shell to each other. For example may conventional bolts be used, or a so called hook bolts. Some examples of such techniques are shown in patent document US1969135, where a hook bolt is tightened by a conventional nut that is located on an opposite side of the hook. This document also shows how two parts of a heat exchanger shell are connected to each other by a large number of bolts that pull a ring towards a flange of one of the parts that shall be connected.

In particular so called spiral heat exchangers relies on techniques that allows the shell of the heat exchanger to be repeatedly opened and closed. The spiral heat exchanger has a coiled tube, or spiral, that is located inside the shell and the shell is sealed by bolts. The alternating first and second flow paths are formed in the spiral and the distance between a steel sheet that makes up the spiral is maintained by using spacer studs that were welded to the sheet prior to rolling it into a spiral. When the spiral has been rolled, alternate side edges are welded and the spiral is placed in a shell that is closed by flat or conical covers that is bolted to the shell. The covers are removed from the shell whenever cleaning is required, or if the spiral need to be replaced.

Today various shells for different kinds of heat exchangers are successfully sealed by using bolts and/or hook bolts, including shells for spiral heat exchangers. However, it is estimated that such bolts may be improved, in particular in respect of their manufacturing costs, and in respect of being effectively used for a spiral heat exchanger that needs to be repeatedly opened and closed.

### Summary

It is an object of the invention to at least partly overcome one or more of the above-identified limitations of the prior art. In particular, it is an object to provide a hook assembly for connecting two pieces of a heat exchanger to each other. Another object is to provide a spiral heat exchanger with covers that are effectively connected to the shell.

To solve these objects a hook assembly for connecting a first part of a heat exchanger to a second part of the heat exchanger is provided. The hook assembly comprises a first hook device that acts on the first part, and a second hook device that acts on the second part for pressing the first and second parts of the heat exchanger towards each other. An elongated bar extends through the first and second hook devices, a first nut is attached to the elongated bar and abuts the first hook device for fixing it relative the first part of the heat exchanger, and a second nut is attached to the elongated bar and abuts the second hook device for fixing it relative the second part of the heat exchanger.

The hook assembly is advantageous in that none of the hook devices is an integral part of the bar to which the nuts are attached. This allows for using more standardized components for the hook assembly, which decreases costs.

According to another aspect a spiral heat exchanger is provided, which comprises a shell, a first cover and a second cover that form an enclosure for two spiral fluid flow channels. Each of the first and second covers are connected to the shell by a number of hook assemblies of the type previously described. The spiral heat exchanger is advantageous in that it may easily be opened and closed by virtue of hook assemblies, while at the same time giving the total heat exchanger a lower production cost.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a side view of a hook assembly for connecting two parts of a heat exchanger to each other,
Fig. 2 is a perspective view of the hook assembly of Fig. 1,
Fig. 3 is a cross-sectional side view of the hook assembly of Fig. 1,
Fig. 4 is an exploded side view of the hook assembly of Fig. 1, and
Fig. 5 is a perspective view of a spiral heat exchanger that is closed by a number of hook assemblies of the same type as shown in Fig. 1.

### Detailed description

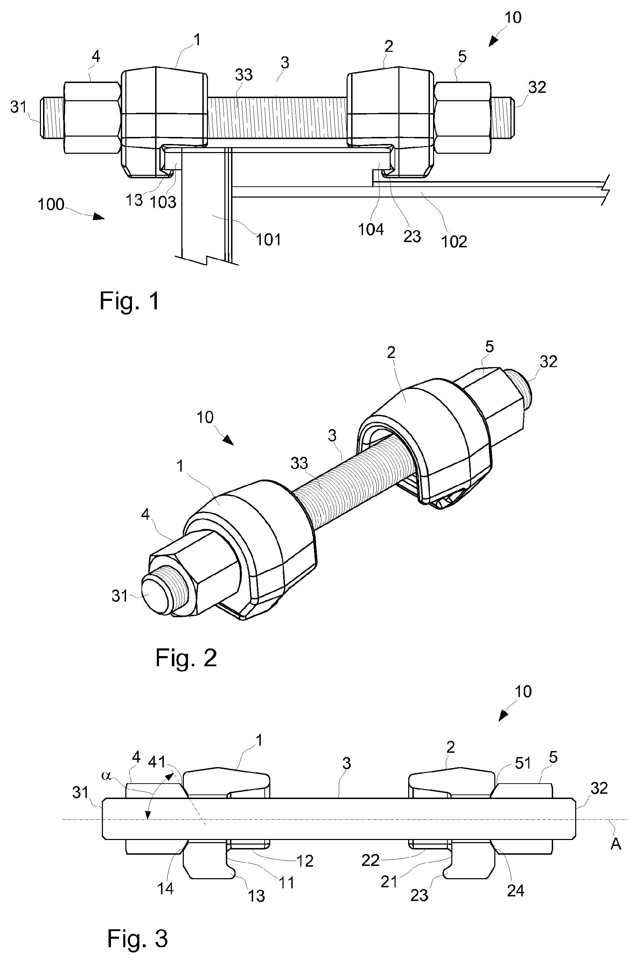

With reference to Figs 1 and 2 a hook assembly 10 is illustrated. The hook assembly 10 connects a first part 101 of a heat exchanger 100 to a second part 102 of the heat exchanger 100. The hook assembly 10 comprises a threaded, elongated bar 3, a first hook device 1, a second hook device 2, a first nut 4 and a second nut 5.

The first hook device 1 and the second hook device 2 are arranged on the elongated bar 3, and the first nut 4 and the second nut 5 are screwed onto the elongated bar 3. The hook devices 1, 2 are located between the nuts 4, 5. The first hook device 1 has a hook point 13 that faces the second hook device 2, and the second hook device 2 has a hook point 23 that faces the first hook device 1. The point 13 of the first hook device 1 engages a protrusion 103 of the first part 101 of the heat exchanger 100, and the point 23 of the second hook device 2 engages a protrusion 104 of the second part 102 of the heat exchanger 100. The elongated bar 3 comprises threads 33 and after the nuts 4, 5 have been screwed onto the elongated bar 3 they (one or both) are tightened such that the hook devices 1, 2 are pressed towards each other. When the hook devices 1, 2 are pressed towards each other they also press the two parts 101, 102 of the heat exchanger 100 towards each other, since the hook devices 1, 2 then abuts the two parts 101, 102. The elongated bar 3 has a first side 31 and a second side 32, and each of the hook devices 1, 2 and the nuts 4, 5 may be arranged on the elongated bar 3 from any of these sides. An inner diameter of the hook devices 1, 2 is slightly larger than the outer diameter of the treads 33 of the elongated bar 3, such that they can move freely on the elongated bar 3.

When the first nut 4 is attached to the elongated bar 3 and abuts and presses the first hook device 1 towards the first part 101, and the second nut 5 is attached to the elongated bar 3 and abuts and presses second hook device 2 towards the second part 102, then the first and second parts 101, 102 of the heat exchanger 100 becomes connected to each other.

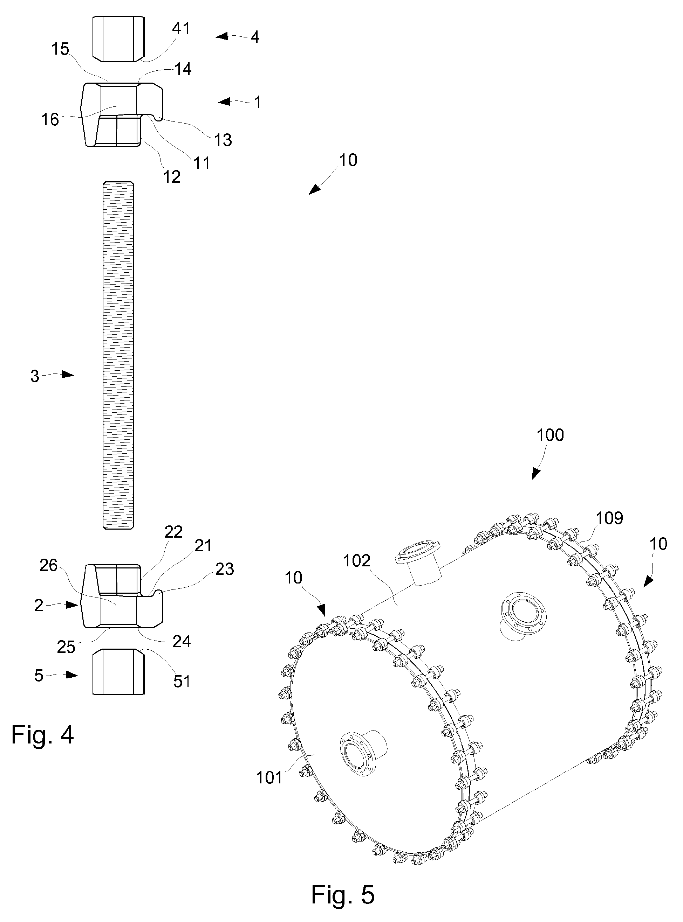

With further reference to Fig. 3 and 4, the first nut 4 is a conventional, internally threaded nut with six outer, flat sides that allows a nut tightening device to grip the nut for tightening it. The inner threads of the first nut 4 matches the treads 33 of the elongated bar 3. The first nut 4 may of course have another number of sides, or another external shape, as long as it can be gripped and tightened by a tool. The first nut 4 has a circular, chamfered surface 41 on one of its sides. The chamfered surface 41 is chamfered by an angle an angle α of 45°-80° relative a longitudinal axis A that extends through the of the elongated bar 3, as seen when the first nut 4 is screwed onto the elongated bar 3. The chamfered surface 41 faces the first hook device 1 and abuts a chamfered surface 14 of the first and second hook devices 1. The first nut 4 then extends partially into a chamfered opening 15 of the first hook device 1.

The second nut 5 is typically identical to the first nut 4, and is arranged with its chamfered surface 51 facing the second hook device 2. The chamfered surface 51 of the second nut 5 abuts a chamfered surface 24 of the second hook device 2. The second nut 5 then extends partially into a chamfered opening 25 of the second hook device 2.

The first hook device 1 comprises a first abutment surface 11 that extends in a direction that is perpendicular to the longitudinal axis A of the elongated bar 3. The first abutment surface 11 engages, i.e. applies pressure on, the first part 101 of the heat exchanger 100. The applied pressure is applied in a direction along the longitudinal axis A, when both hook devices 1, 2 abut a respective part 101, 102 of the heat exchanger 100, when both nuts 4, 5 abut a respective hook device 1, 2, and when at least one of the nuts 4, 5 is tightened towards its adjacent hook device.

The first hook device 1 comprises a second abutment surface 12 that extends in a direction that is parallel a longitudinal axis A of the elongated bar 3. The second abutment surface 12 engages the first part 101 of the heat exchanger 100 in a direction that is perpendicular to the longitudinal axis A, such that the first hook device 1 becomes fixed in a radial direction of the elongated bar 3. The first hook device 1 comprises a chamfered opening 15 into which the first nut 4 extends. The chamfered opening 15 is chamfered by the same angle α as the chamfered surface 41 of the nut 4. Chamfered surfaces assists in fixing the hook devices 1, 2 in the radial direction of the elongated bar 3.

The hook assembly 10 is advantageous in that it is releasable from the first and second parts 101, 102 of the heat exchanger 100 by only disengaging one of the nuts 4, 5. Here disengaging the nut means screwing it such that it moves along the elongated bar 3, in a direction away from the hook device that the nut was adjacent to.

Another advantage is that conventional, threaded bars may be obtained and used as the elongated bar 3. As may be seen, first hook device 1 comprises only one single through hole 16, and the elongated bar 3 extends through this single though hole 16.

The second hook device 2 is typically identical to the first hook device 1, and as also a first abutment surface 21, a second abutment surface 22, a single through hole 26 and a chamfered surface 24, and, thus, a chamfered opening 25 into which the second nut 5 extends.

The hook assembly 10 comprises in the preferred embodiment only five components, i.e. not more than five components and not less than five components, the five components being the first hook device 1, the second hook device 2, the elongated bar 3, the first nut 4 and the second nut 5. In other embodiments additional components may be used, for example washers that are located between the nuts and the hook devices.

With reference to Fig. 5 a spiral heat exchanger 100 is illustrated. The spiral heat exchanger 100 has a shell 102, a first cover 101 and a second cover 109 which together from an enclosure for two spiral fluid flow channels. The spiral fluid flow channels are formed by a coil. Each of the first and second covers 101, 109 are connected to the shell 102 by a number of hook assemblies 10 of the type described above. The spiral heat exchanger 100 has an inlet and outlet for a first fluid and an inlet and outlet for a second fluid, and is, apart from the hook assemblies, a conventional spiral heat exchanger that is manufactured according to known techniques and principles.

From the description above follows that, although various embodiments of the invention have been described and shown, the invention is not restricted thereto, but may also be embodied in other ways within the scope of the subject-matter defined in the following claims.

## Claims

1. A hook assembly for connecting a first part (101) of a heat exchanger (100) to a second part (102) of the heat exchanger (100), comprising
a first hook device (1) that acts on the first part (101), and
a second hook device (2) that acts on the second part (102) for pressing the first and second parts (101, 102) towards each other, **characterized by**
an elongated bar (3) that extends through the first and second hook devices (1, 2),
a first nut (4) that is attached to the elongated bar (3) and abuts the first hook device (1) for fixing it relative the first part (101) of the heat exchanger (100),
a second nut (5) that is attached to the elongated bar (3) and abuts the second hook device (2) for fixing it relative the second part (102) of the heat exchanger (100).

2. A hook assembly according to claim 1, wherein the elongated bar (3) is a threaded, elongated bar.

3. A hook assembly according to claim 1 or 2, wherein the nuts (4, 5) are threaded nuts that are screwed onto the elongated bar (32).

4. A hook assembly according to any one of claims 1 - 3, wherein each of the nuts (4, 5) comprises a circular, chamfered surface (41, 51) that abuts surfaces (14, 24) of the first and second hook devices (1, 2).

5. A hook assembly according to claim 4, wherein the chamfered surface (41) of the first nut (4) is chamfered by an angle (α) of 45°-80° relative a longitudinal axis (A) of the elongated bar (3).

6. A hook assembly according to any one of claims 1 - 5, wherein each of the nuts (4, 5) extends partially into an opening (15, 25) of the hook device (1, 2) that the respective nut (4, 5) abuts to.

7. A hook assembly according to any one of claims 1 - 6, wherein each of the hook devices (1, 2) comprises a respective abutment surface (11, 21) that extends in a direction that is perpendicular to a longitudinal axis (A) of the elongated bar (3), said abutment surfaces (11, 21) engaging the first and second parts (101, 102) of the heat exchanger (100).

8. A hook assembly according to any one of claims 1 - 7, wherein each of the hook devices (1, 2) comprises a respective abutment surface (12, 22) that extends in a direction that is parallel a longitudinal axis (A) of the elongated bar (3), said abutment surfaces (12, 22) engaging the first and second parts (101, 102) of the heat exchanger (100).

9. A hook assembly according to any one of claims 1 - 8, wherein each of the hook devices (1, 2) comprises a respective chamfered opening (15, 25) into which the respective, abutting nut (4, 5) extends.

10. A hook assembly according to any one of claims 1 - 9, wherein the hook assembly is releasable from the first and second parts (101, 102) by disengaging only one of the nuts (4, 5) from hook device (1, 2).

11. A hook assembly according to any one of claims 1 - 10, wherein the first hook device (1) comprises only one single through hole (16), the elongated bar (3) extending through this single though hole (16).

12. A hook assembly according to any one of claims 1 - 11, comprising only five components, the five components being the first hook device (1), the second hook device (2), the elongated bar (3), the first nut (4) and the second nut (5).

13. A spiral heat exchanger comprising a shell (102), a first cover (101), and a second cover (109) that form an enclosure for two spiral fluid flow channels, wherein each of the first and second covers (101, 109) are connected to the shell (102) by a number of hook assemblies (10) according to any one of claims 1 - 12.
